# DEMANDE DE BREVET EUROPEEN

(11) **EP 1 065 081 A1**
(43) Date de publication de la demande: **03.01.2001**
(21) Numéro de dépôt: 00113532.6
(22) Date de dépôt: 27.06.2000
(51) Int. Cl.: B60H 3/06

(54) **Procédé de détection de colmatage d'un filtre à air et système de ventilation mettant en oeuvre un tel procédé**

(30) Priorité: 30.06.1999 FR 9908405
(71) Demandeur: VALEO CLIMATISATION, 78321 La Verrière (FR)
(72) Inventeur: Abouchaar, Nicolas, 96476 Rodach (DE)

(57) **Abrégé**

La présente invention a pour objet un procédé de mesure de colmatage d'un filtre à air d'un système de ventilation, de conditionnement d'air et/ou de chauffage d'un habitacle d'un véhicule automobile, caractérisé en ce qu'il comporte les étapes consistant à:
a) mettre en marche un dispositif (7) de pompage de l'air comportant un moteur électrique (11) entraînant une pièce aérodynamique tournante d'entraînement de l'air (9);
b) mesurer une valeur caractéristique du moteur électrique (11) entraînant au moins une pièce aérodynamique tournante d'entraînement de l'air (9) passant par le filtre (3) dont on mesure le colmatage pour obtenir une valeur de mesure;
c) comparer la valeur de mesure à au moins une valeur d'étalonnage pour en déduire une mesure du colmatage du filtre.

## Description

La présente invention se rapporte principalement à un procédé de détection de colmatage d'un filtre à air et à un système de ventilation de conditionnement d'air et/ou de chauffage de véhicule automobile mettant en oeuvre un tel procédé.

Il est habituel de filtrer l'air amené par un système de ventilation de chauffage et/ou de conditionnement d'air d'un habitacle d'un véhicule automobile en faisant passer l'air par un filtre à air. Les particules, notamment les poussières, sont retenues par le filtre à air qui finit par être colmaté, c'est-à-dire qu'il induit des pertes de charges importantes réduisant le débit d'air passant par le filtre, et donc les performances du système de ventilation. Le colmatage du filtre dépend de la taille et de la quantité de particules déposées sur ce filtre. Ainsi, la rapidité du colmatage dépend, en très grande partie, des conditions d'utilisation et notamment de la quantité de poussière dans l'air au moment de l'utilisation du système de ventilation de conditionnement d'air et/ou de chauffage.

Il est donc souhaitable de pouvoir détecter l'état de colmatage.

C'est par conséquent un but de la présente invention d'offrir un procédé de détection de colmatage de filtre facile à mettre en oeuvre.

C'est également un but de la présente invention d'offrir un procédé de détection de colmatage de filtre évitant les fausses alertes. C'est aussi un but de la présente invention d'offrir un procédé de détection de colmatage de filtre mettant en oeuvre peu de composants électroniques spécifiques.

C'est aussi un but de la présente invention d'offrir un procédé fiable de détection de colmatage de filtre.

Au moins un des buts précités est atteint par ce procédé de mesure de colmatage d'un filtre à air d'un système de ventilation, de conditionnement d'air et/ou de chauffage d'un habitacle d'un véhicule automobile, caractérisé en ce qu'il comporte les étapes consistant à:
a) mettre en marche un dispositif de pompage de l'air comportant un moteur électrique entraînant une pièce aérodynamique tournante d'entraînement de l'air;
b) mesurer une valeur caractéristique du moteur électrique entraînant au moins une pièce aérodynamique tournante d'entraînement de l'air passant par le filtre dont on mesure le colmatage, pour obtenir une valeur de mesure;
c) comparer la valeur de mesure à au moins une valeur d'étalonnage pour en déduire une mesure du colmatage du filtre.

Le procédé selon la présente invention peut mettre en oeuvre la mesure de l'intensité du courant absorbé par un moteur électrique d'entraînement du pulseur de circulation d'air dans le système de ventilation, de conditionnement d'air et/ou de chauffage de l'habitacle d'un véhicule automobile. Par exemple, lors d'une première étape, on effectue un étalonnage. Cet étalonnage peut être une mesure réalisée avec un filtre neuf. Dans le cas où l'air recirculé n'est pas filtré, il est possible de réaliser une acquisition d'une valeur d'étalonnage, par exemple par l'acquisition d'un courant d'étalonnage iₑ du moteur électrique correspondant avantageusement à la ventilation de l'habitacle du véhicule par recirculation de l'air prélevé dans cet habitacle sans filtrage.

Pour un courant i mesuré inférieur au courant d'étalonnage iₑ multiplié par un coefficient constant inférieur à 1, éventuellement compte tenu des diverses corrections, on considère que le filtre est colmaté et on déclenche une alarme, par exemple sous la forme de l'affichage d'un signal lumineux.

L'invention concerne également une installation de ventilation, de climatisation et/ou de chauffage de l'habitacle d'un véhicule automobile mettant en oeuvre le procédé, caractérisée en ce qu'elle comporte un filtre à air, des moyens de pompage de l'air comportant un moteur électrique entraînant une pièce aérodynamique tournante d'entraînement de l'air passant par ledit filtre pour obtenir une valeur mesurée et, des moyens de comparaison avec une valeur d'étalonnage pour générer une mesure du courant absorbé par le moteur électrique et des moyens indication de colmatage telle qu'une alerte. Ladite comparaison peut être assurée par le calculateur du système de conditionnement d'air. L'installation peut comporter un moyen d'obtention de la valeur d'étalonnage par mesure d'une valeur caractéristique du moteur électrique entraînant au moins une pièce aérodynamique tournante d'entraînement d'air ne passant pas par le filtre, par exemple de l'air recirculé.

L'invention sera mieux comprise au moyen de la description ciaprès et de la figure annexée, donnée à titre d'exemple non limitatif, et qui est une vue schématique d'un système selon la présente invention.

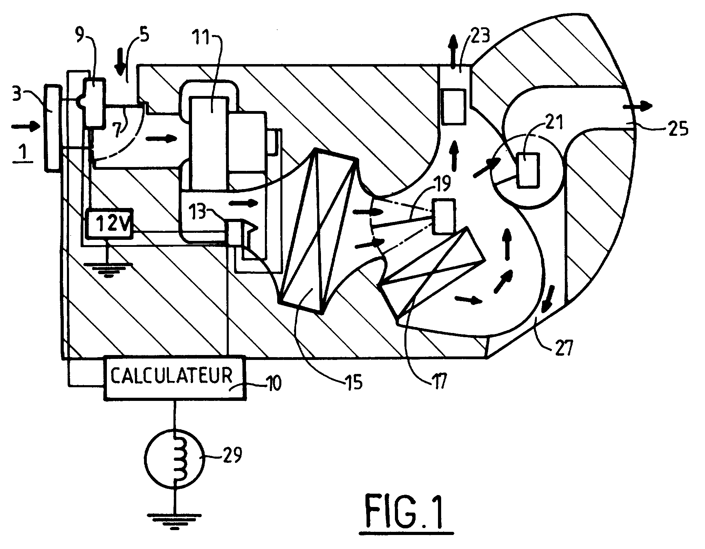

Sur la figure 1, on peut voir, représenté de manière schématique, un système de ventilation, de chauffage et/ou de climatisation de l'habitacle d'un véhicule automobile. Le système de ventilation représenté comporte une entrée d'air extérieur 1 filtrée par un filtre à poussière 3 et une entrée 5 non filtrée permettant la ventilation par la recirculation d'air provenant de l'habitacle. Un volet 7, avantageusement motorisé par un moteur 9, permet, sur commande d'un calculateur 10 d'ouvrir l'entrée d'air extérieur 1 ou, au contraire l'entrée 5 de l'air provenant de l'habitacle. L'air est entraîné par un dispositif de pompage d'air 11 tel qu'un pulseur comportant une hélice, une turbine, des ailettes ou analogues, entraîné par un moteur électrique commandé par un circuit 13 lui-même commandé par le calculateur 10. Un premier échangeur de chaleur 15 et/ou un deuxième échangeur de chaleur 17 permettent de modifier la température de l'air. Un volet 19 permet, sur commande d'orienter ou non l'air vers l'échangeur 17.

Un volet de distribution 21 permet la distribution d'air entre les diverses sorties d'air dans l'habitacle, par exemple entre une première sortie 23 au niveau du pare-brise permettant d'assurer le dégivrage/désembuage, une deuxième sortie 25 au niveau de la tête des occupants de l'habitacle et une troisième sortie 27 située au niveau des pieds des occupants de l'habitacle.

Il existe également des systèmes de ventilation dans lesquels le filtre est disposé en aval du volet d'entrée d'air, et dans ce cas aussi bien l'air recyclé que l'air extérieur est filtré.

La présente invention est basée sur la mise en évidence du fait que le colmatage du filtre 3 diminuant le flux d'air entraîné par le pulseur 11 modifie les conditions de fonctionnement du moteur, et par exemple diminue l'intensité du courant électrique absorbé par le moteur de ce pulseur et sa vitesse de rotation.

Avantageusement, on effectue une mesure d'un courant de référence. Avantageusement, le courant de référence est mesuré dans les mêmes conditions de rendement de moteur du pulseur 11 de température et d'étanchéité d'habitacle. Avantageusement, les mesures sont effectuées lorsque l'habitacle est isolé, c'est-à-dire lorsque les portes et fenêtres sont fermées lorsque le véhicule est à l'arrêt, c'est-à-dire que sa vitesse par rapport à l'air extérieur est nulle ou sensiblement nulle.

Une première méthode de détection de colmatage peut être mise en oeuvre que le filtre soit disposé en amont (voir Fig. 1) ou en aval du volet d'entrée d'air. Elle consiste à comparer le courant électrique traversant le moteur électrique d'entraînement du pulseur avec une valeur de référence mesurée avec un filtre neuf. Cette méthode repose sur le principe que le colmatage du filtre génère une perte de charge supplémentaire sur le circuit aérolique de l'air traité, ce qui produit une baisse du courant électrique qui traverse ledit moteur. La meilleure précision de cette mesure est obtenue lorsqu'elle est effectuée dans les mêmes conditions que la mesure de référence, c'est-à-dire, à vitesse identique du véhicule et à distribution d'air identique dans le véhicule (aération tout froid, dégivrage tout chaud...), à même ouverture des vitres et à même température des enroulements du moteur laquelle dépend de la température extérieure, du temps de fonctionnement du moteur électrique et du couple qu'il a à vaincre. Cette méthode s'applique de ce fait plutôt à une confirmation d'intervention du garage avec un véhicule à l'arrête, le moteur électrique fonctionnant depuis un temps donné et à distribution d'air donnée.

Une deuxième méthode, utilisable dans le cas où le filtre est situé en amont du volet 7 d'entrée d'air, permet de générer une valeur d'étalonnage instantanée, indépendante de l'état de colmatage du filtre. La valeur d'étalonnage et la valeur de mesure sont réalisées dans un laps de temps très court, ce qui permet de s'assurer que ces deux mesures sont effectuées dans des mêmes conditions de distribution, d'air de vitesse du véhicule, de température extérieure et de température du moteur. En outre, l'obtention d'une valeur d'étalonnage instantanée, permet de tenir compte du vieillissement du moteur électrique. L'ordre d'obtention de la valeur d'étalonnage et de la valeur de mesure est indifférent. Selon cette deuxième méthode, on effectue par exemple une première mesure, le volet 7 assurant l'ouverture de l'entrée 5 et la fermeture de l'entrée 1. Dans ce cas, le filtre 1 n'induit pas de perte de charge dans le circuit de ventilation, ce qui permet de mesurer une valeur d'étalonnage en mesurant une valeur caractéristique du moteur du pulseur 11 telle que par exemple, l'intensité du courant absorbé pour une tension d'alimentation donnée, par exemple égale à 12 volts, une mesure de tension au bord d'une résistance placée en série avec ce moteur, la vitesse de rotation de ce moteur ou analogue. La valeur de la mesure qui constitue une valeur d'étalonnage, est mémorisée par exemple par le calculateur 10.

Sur commande d'un calculateur 10, le volet 7 bascule de manière à fermer l'entrée 5 et à ouvrir l'entrée 1. On effectue une mesure de valeur caractéristique telle que par exemple, le courant absorbé par le moteur du pulseur 11 etc.., pour obtenir une valeur de mesure.

Lorsque le rapport entre la valeur de mesure et la valeur d'étalonnage baisse au-delà d'un seuil prédéterminé, éventuellement réglable par le conducteur, le calculateur 10 actionne une alarme telle que par exemple, un témoin lumineux 29 placé sur le tableau de bord.

La présence de vent n'est pas gênante car elle tend à augmenter le débit à travers les ouvertures d'aération et à augmenter le courant absorbé par le moteur du pulseur. Dans le pire des cas, un filtre colmaté sera considéré comme bon, mais il sera détecté à la prochaine mesure en l'absence de vent, ce qui n'est pas gênant car le colmatage d'un filtre évolue lentement.

On peut par exemple calculer au cours de l'étape 6 un indice de colmatage égal au rapport de l'intensité absorbé par le moteur du pulseur 11 lorsque l'entrée 1 est ouverte divisée par l'intensité du courant circulant dans le moteur du pulseur 11 aspirant de l'air à travers un filtre neuf (première méthode) ou bien à travers l'entrée d'air récirculé (deuxième méthode). Cette intensité est une constante pour un véhicule et est stockée dans des moyens de mémorisation du calculateur 10. La variation du pourcentage de réduction du débit d'air d'un filtre avec la diminution de l'indice de colmatage est une fonction afine. Pour un filtre neuf, l'indice de colmatage est égal à 1 et la réduction du débit est égal à 0, alors que pour la réduction du débit de 40 % par rapport à celle d'un filtre neuf, l'indice de colmatage est égal à 0,9.

Dans le cadre de la deuxième méthode, il est possible de s'affranchir des conditions de mesure en calculant un indice de colmatage dit 〈〈normalisé〉〉 égal au rapport lc=[(intensité absorbée par le moteur du pulseur en position air frais du filtre actuel)/(intensité absorbée par le moteur du pulseur 11 en position recirculation d'air (mesure actuelle)]/[(intensité absorbée par le moteur du pulseur en position air frais du filtre neuf)/(intensité absorbée par le moteur du pulseur 11 en position recirculation d'air (mesure usine)].

Avantageusement, pour l'une ou l'autre des deux méthodes, la mesure du colmatage du filtre est effectuée au démarrage, après la fermeture des portes et avant une éventuelle ouverture des vitres.

En variante, la mesure du colmatage est effectuée par le service après-vente. Une mesure selon la première méthode est particulièrement adapté à des systèmes de ventilation comportant des appareils de climatisation non régulés et/ou dépourvus de moyens 9 d'entraînement du volet 7. Le volet peut être actionné manuellement ou on peut effectuer une première mesure pour obtenir une valeur de mesure, le filtre étant en place et une deuxième mesure pour obtenir une valeur de référence, le filtre étant déposé ou le filtre étant remplacé par un filtre neuf. La valeur caractéristique du moteur du pulseur 11 est déterminée par des moyens de mesures intégrés au véhicule ou, avantageusement dans ce cas par des moyens de mesures séparés.

La présente invention est extrêmement simple à mettre en oeuvre et d'un faible coût de revient. La mesure de courant pouvant être effectuée par la mise en oeuvre d'une résistance utilisée pour piloter la consommation du moteur du pulseur. En variante, on utilise un capteur à effet Hall permettant une mesure plus précise mais d'un coût de revient plus élevé.

Pour l'utilisateur, il est prévu d'afficher une alarme, par exemple, un voyant sur le tableau de bord représentant le fait que le colmatage du filtre dépasse un seuil déterminé.

## Revendications

1. Procédé de mesure de colmatage d'un filtre à air d'un système de ventilation, de conditionnement d'air et/ou de chauffage d'un habitacle d'un véhicule automobile, caractérisé en ce qu'il comporte les étapes consistant à:
a) mettre en marche un dispositif (7) de pompage de l'air comportant un moteur électrique (11) entraînant une pièce aérodynamique tournante d'entraînement de l'air (9);
b) mesurer une valeur caractéristique du moteur électrique entraînant au moins une pièce aérodynamique tournante d'entraînement de l'air passant par le filtre (3) dont on mesure le colmatage pour obtenir une valeur de mesure;
c) comparer la valeur de mesure à au moins une valeur d'étalonnage pour en déduire une mesure du colmatage du filtre.

2. Procédé selon la revendication 1, caractérisé en ce qu'il comporte en outre une étape d'affichage d'un indice de colmatage déterminé à l'étape c).

3. Procédé selon la revendication 1 ou 2, caractérisé en ce qu'il comporte en outre une étape d'affichage d'une alarme (29) lorsque le colmatage du filtre dépasse un seuil prédéterminé.

4. Procédé selon une des revendications précédentes, caractérisé en ce qu'il comporte en outre une étape d'obtention de ladite valeur d'étalonnage par mesure d'une valeur caractéristique du moteur électrique entraînant une pièce aérodynamique tournante d'entraînement d'air passant à travers un filtre neuf.

5. Procédé selon l'une quelconque des revendications précédentes, caractérisé en ce qu'il comporte en outre une étape d'obtention de ladite valeur d'étalonnage par mesure une valeur caractéristique du moteur électrique entraînant une pièce aérodynamique tournante d'entraînement d'air ne passant pas par le filtre (3) dont on mesure le colmatage.

6. Procédé selon une des revendications précédentes, caractérisé en ce que la mesure de la valeur caractéristique du moteur électrique est une mesure de l'intensité du courant absorbé par ce moteur.

7. Procédé selon la revendication 6, caractérisé en ce qu'il comporte une étape de mesure d'une tension électrique aux bornes d'une résistance électrique connectée en série avec le moteur.

8. Procédé selon l'une des revendications 1 à 5, caractérisé en ce que la mesure de la valeur caractéristique du moteur est une mesure de la vitesse de rotation de ce moteur

9. Installation de ventilation, de climatisation et/ou de chauffage de l'habitacle d'un véhicule automobile mettant en oeuvre un procédé selon l'une quelconque des revendications précédentes, caractérisée en ce qu'elle comporte un filtre à air (3), des moyens (11) de pompage de l'air comportant un moteur électrique entraînant au moins une pièce aérodynamique tournante d'entraînement de l'air, des moyens de mesure d'une valeur caractéristique du moteur électrique entraînant au moins une pièce aérodynamique tournante d'entraînement de l'air passant par ledit filtre (3) pour obtenir une valeur mesurée et des moyens de comparaison avec une valeur d'étalonnage pour générer une indication de colmatage telle qu'une alerte.

10. Installation selon la revendication 9, caractérisée en ce qu'elle comporte un calculateur (10) du système de conditionnement d'air et, en ce que ce calculateur (10) assure la comparaison de la valeur mesurée du courant avec ladite valeur d'étalonnage.

11. Installation selon une des revendications 9 ou 10, caractérisée en ce qu'il comporte un moyen d'obtention de ladite valeur d'étalonnage pour mesure d'une valeur caractéristique du moteur électrique (11) entraînant au moins une pièce aérodynamique tournante d'entraînement de l'air ne passant pas par le filtre (3).

12. Installation selon la revendication 11, caractérisée en ce que l'air qui ne passe pas par le filtre est de l'air recirculé.
